# EUROPÄISCHE PATENTANMELDUNG

(11) **EP 1 413 896 A2**
(43) Veröffentlichungstag der Anmeldung: **28.04.2004**
(21) Anmeldenummer: 03103297.2
(22) Anmeldetag: 04.09.2003
(51) Int. Cl.: G01S 7/282, G01S 13/22

(54) **Verfahren zum Betrieb eines Radarsensors sowie Anordnungen hierzu**

(30) Priorität: 26.10.2002 DE 10249961
(71) Anmelder: ROBERT BOSCH GMBH, 70442 Stuttgart (DE)
(72) Erfinder: Haensel, Jens, 71229, Leonberg (DE)

(57) **Zusammenfassung**

Zum Betrieb eines Radarsensors werden die Sendepulse bzgl. ihres Aussendezeitpunktes innerhalb eines vorgegebenen Bereiches variiert.

Damit lässt sich für Radaranwendungen kleiner Reichweite eine Fernechounterdrückung erreichen.

## Beschreibung

Die Erfindung geht aus von einem Verfahren zum Betrieb eines Radarsensors nach dem Pulsradarprinzip, insbesondere für Radaranwendungen kleiner Reichweite.

### Stand der Technik

Aus der DE 19963005 A1 ist ein Radarsystem bekannt, bei dem Sendepulse periodisch gesteuert von einer PRF-Quelle (Pulse Repetition Frequency) abgestrahlt werden. Die an Objekten reflektierten empfangenen Radarpluse werden einem Mischer zugeführt, dem als Referenzsignal ein von der PRF-Quelle über eine Verzögerungsleitung abgeleitetes Signal zugeleitet wird. Mit der Verzögerungsleitung lässt sich eine gewünschte Entfernungszelle einstellen, innerhalb derer Zielobjekte ausgewertet werden sollen. Der Mischer liefert ein Auswertesignal, wenn die Verzögerungszeit der Verzögerungsleitung mit der Flugzeit eines Sendepulses zum Ziel übereinstimmt.

### Vorteile der Erfindung

Mit den Maßnahmen des Anspruchs 1, d.h. einer Variation der Sendepulse bezüglich ihres Aussendezeitpunktes innerhalb eines vorgegebenen Bereichs, lässt sich sowohl eine Reduzierung der abgestrahlten Außerband-Leistung bei diskreten Frequenzen erreichen, als auch eine Unterdrückung unerwünschter Femechos. Hierbei handelt es sich um Reflektionen von Objekten, die sich außerhalb des eigentlichen Mess- bzw. Auswertebereiches befinden und aufgrund einer entsprechenden Flugzeit der Messpulse Scheinziele im eigentlichen Messbereich hervorrufen können, die von einem wirklichen Ziel in einer gewünschten Entfernungszelle nicht unterschieden werden können. Solche Femechos treten insbesondere bei großen Objekten außerhalb der Messreichweite auf, die bei Radaranwendungen kleiner Reichweite (ca. 20-40 Meter) vorzugsweise im Kraftfahrzeugbereich, unerwünschte Störquellen darstellen.

Im Gegensatz zur Realisierung gemäß DE 199 63 005 A1, wo der Aussendezeitpunkt der Sendepulse innerhalb einer Periode konstant ist, lässt sich durch die erfindungsgemäße zeitliche Variation der Sendepulse innerhalb einer Periode das Frequenzspektrum verbreitern und somit die Außerband-Leistung pro Frequenzintervall verringern.

Die erfindungsgemäße Lösung ermöglicht eine einfache und genaue Signalauswertung ohne störende Fernziele. Ein Einfluss auf die Genauigkeit des verwendeten Zeitmessgliedes ist bei dem verwendeten Verfahren nicht gegeben. Aufgrund der trotz Variation der Aussendezeitpunkte im Mittel gleichen Sendepulsabstände (die Aussendezeitpunkte werden nur innerhalb eines vorgegebenen Bereiches/Periode variiert) ergibt sich kein negativer Einfluss auf eine eventl. vorgesehene Regelung.

Es ist vorteilhaft, die an Objekten reflektierten Empfangspulse über eine vorgegebene Zeit in einer gewählten Entfernungszelle aufzuintegrieren. Durch die Variation des Aussendezeitpunktes der Sendepulse erhält man dadurch für die außerhalb des eigentlichen Messbereiches einer Entfemungszelle liegenden Objekte kein zeitkonstantes Empfangssignal. Dies führt dazu, dass sich über diese systembedingte Integration kein Zielpeak aufbauen kann. Gegenüber einem System mit festem Aussendezeitpunkt ergibt sich insbesondere bei einer Variation des Aussendezeitpunktes in mehreren Stufen eine Dämpfung von Fernechos entsprechend der Anzahl der Stufen zur Variation des Aussendezeitpunktes. So ist z.B. bei zwei zugelassenen Variationen/Stufen eine Dämpfung von -3 dB der Femechozelle erreichbar.

Mit der Schaltungsanordnung nach Anspruch 4 werden Einzelabgriffe einer von einer Taktquelle gespeisten Verzögerungskette auf einen Multiplexer geführt. Die am Ausgang des Multiplexers auftretenden Impulse legen die variierenden Sendepulse fest, was zur Folge hat, dass Reflektionen, die von einem weiter entfernten Objekt empfangen werden, bezogen, auf einen längeren Messzyklus, nicht mehr zeitlich stabil sind. Die Folge davon ist, dass ein durch ein Fernecho empfangener Puls eine kleinere Amplitude und gleichzeitig auch ein anderes Verhalten hat, als ein regulärer Zielpuls. Dieser kann durch einfache Algorithmen in der Signalverarbeitung eliminiert werden.

Bei der Schaltungsanordnung gemäß Anspruch 5 werden zu einem von einer PRF-Quelle abgeleiteten Sägezahnsignal zwei Signale entsprechender Amplitude addiert, wobei das eine Signal eine sich langsam, z.B. dreieckförmig ändernde Spannung darstellt und das zweite Signal ein sich mit dem Takt des Sägezahnsignal änderndes, insbesondere zufallscodiertes Signal kleiner Amplitude. Nach der Summation ändert sich das Mittenpotential des Ausgangssignals entsprechend. Diese Änderung wird in einem nachgeschalteten Pulsformer so ausgewertet, dass sich die Periode der Ausgangspulse mit jedem Takt der PRF-Quelle ändert und somit auch die Aussendezeitpunkte der Sendepulse.

Mit einer an den Ausgang des Pulsformers angeschlossenen Verzögerungsleitung lassen sich Referenzpulse zur Auswertung der an Objekten reflektierten Sendepulse erzeugen und bei geeigneter Einstellung Femechos unterdrücken.

### Zeichnungen

Anhand der Zeichnungen werden Ausführungsbeispiele der Erfindung erläutert.

Es zeigen:
Figur 1 ein Blockschaltbild eines Radarsensors,
Figur 2 das Prinzip zum Betrieb eines Radarsensors mit zeitlich konstanten Sendepulsen,
Figur 3 das Prinzip zum Betrieb eines Radarsensors mit Variation des Aussendezeitpunktes der Sendepulse,
Figur 4 ein Blockschaltbild zur Erzeugung zeitlich variierbarer Sendepulse mittels einer Verzögerungskette,
Figur 5 ein Blockschaltbild zur Erzeugung zeitlich variierbarer Sendepulse mittels einer Signalüberlagerung.

### Beschreibung von Ausführungsbeispielen

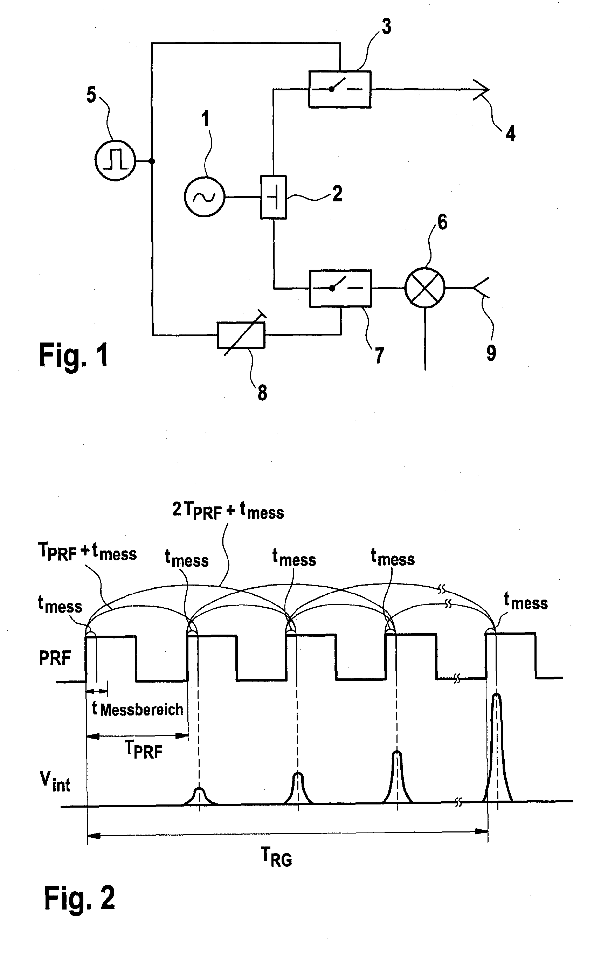

Zum Betrieb eines Radarsensors nach dem Pulsradarprinzip ist gemäß Figur 1 ein Oszillator 1 zur Erzeugung einer Schwingung im Mikrowellenbereich, beispielsweise 24 GHz vorgesehen. Das Ausgangssignal des Oszillators wird über einen Teiler 2 zu einem HF-Schalter 3 geführt, der das Mikrowellensignal auf eine Sendeantenne 4 leitet. Der HF-Schalter 3 wird periodisch im Takt einer PRF-Taktsignalquelle 5 (Pulse Repetition Frequency) zur Abgabe von Sendepulsen geschaltet. Über eine Empfangsantenne 9 werden die an Objekten reflektierten Radarpulse empfangen und einem Mischer 6 zugeführt. Dem Mischer 6 wird ebenfalls über einen HF-Schalter 7 das Ausgangssignal des Oszillators 1 zugeführt. Der Schalter 7 wird von der Taktquelle 5 über eine Verzögerungsleitung 8 gesteuert. Die Verzögerungszeit der Verzögerungsleitung 8 wird dabei so eingestellt, dass Referenzpulse für eine vorgegebene Entfernungszelle bereitgestellt werden, die zusammen mit den Empfangspulsen ausgewertet werden. Bei zeitlicher Koinzidenz zwischen Referenzpuls und Echoimpulsen erscheint am Ausgang des Mischers 6 ein Signal, welches zur weiteren Auswertung, z.B. zur Integration, geeignet ist.

Wie Figur 2 zeigt, erfolgt die Messung im positiven Bereich des PRF-Taktes. Mit Beginn der steigenden Flanke wird ein Messpuls ausgesendet. Der Empfangspuls realer Objekte im eigentlichen Messbereich t_{Messbereich} wird über eine festgelegten Zeit T_{RG} in einer gewählten Entfernungszelle aufintegriert und man erhält die einem Ziel entsprechende Spannung V_{INT}. Befindet sich ein Objekt in einer Entfernung T_{PRF}+tₘₑₛₛ wird dessen Echo ebenfalls in der eigentlichen Entfernungszelle, repräsentiert durch tₘₑₛₛ, abgebildet und über die Messzeit in dieser Entfernungszelle aufmtegriert.

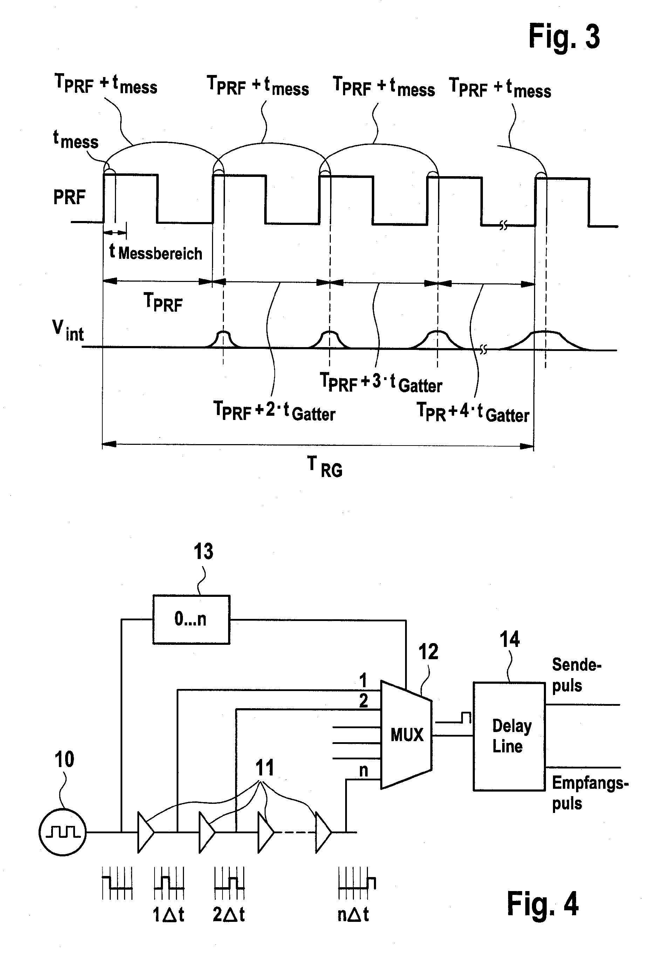

Wird der Zeitpunkt der steigenden Flanke erfindungsgemäß, wie Figur 3 zeigt, innerhalb der Periodenzeit des PRF-Taktes variiert, ist somit auch der Zeitpunkt, zu dem ein Impuls ausgesendet wird, nicht mehr periodisch. Man erhält dadurch für außerhalb des eigentlichen Messbereichs liegende Objekte aufgrund der Variation des Sendezeitpunktes kein zeitkonstantes Empfangssignal. Das führt dazu, dass sich über diese systembedingte Integration kein Zielpeak aufbauen kann. Gegenüber dem System mit festem Sendezeitpunkt ergibt sich somit eine Dämpfung von Femechos entsprechend der Anzahl der Variationen des Sendezeitpunktes. Bei z.B. zwei zugelassenen Variationen ist eine Dämpfung von - 3 dB der Femechozelle erreichbar.

Durch zeitliche Variation der Sendepulse variiert die Ablage der einzelnen Spektrallinien der Sendepulse. Dies führt zur Verringerung der einzelnen Linienhöhen (Leistung). Somit ist das Verfahren nach der Erfindung geeignet, besonders engtolerierte Forderungen nach Außerbandstörungen zu erfüllen.

Nachfolgend werden zwei Anordnungen, insbesondere zum Durchführen des erfmdungsgemäßen Verfahrens aufgezeigt.

Die in Figur 4 dargestellte Anordnung zur Erzeugung zeitlich variierbarer Sendepulse besteht aus einer Taktquelle 10, die einen stabilisierten PRF-Takt abgibt sowie aus einer Verzögerungskette 11 und einem Multiplexers 12, der über einen Zähler 13 gesteuert wird. Die Taktquelle 10 speist die Verzögerungskette 11. Deren einzelne Glieder bestehen aus Logikbausteinen mit einer bekannten Gatterlaufzeit Δt. Hinter jedem Kettenglied (Einzelabgriff der Verzögerungskette) kann über den Multiplexers 12 das entsprechende zeitverzögerte Signal abgegriffen werden. Gleichzeitig wird der stabilisierte Takt der Taktquelle 10 durch den mehrstufigen Zähler 13 gezählt, der dem entsprechenden Eingang des Multiplexers 12 ansteuert. An den Ausgang des Multiplexers 12 ist eine Verzögerungsleitung 14 derart anschließbar und einstellbar, dass Referenzpulse zur Auswertung der an Objekten reflektierenden Sendepulse erzeugbar sind. Die in Figur 4 dargestellte Anordnung ersetzt bei der erfmdungsgemäßen Realisierung die Baueinheiten 5 und 8 in Figur 1. Die Verzögerungsleitung 14 lässt die variierenden Ausgangspulse des Multiplexers 12 praktisch unverzögert zum HF-Schalter 3 passieren, wohingegen letztere um eine feste Verzögerungszeit entsprechend der gewünschten Empfangszelle verzögert an den HF-Schalter 7 geführt werden.

Das Eingangssignal für die Verzögerungsleitung 14 ist bei entsprechender Dimensionierung der Verzögerungskette 11 somit ein Puls, der innerhalb einer Periode des stabilisierten Taktes jittert. Dies führt dazu, dass sich für ein Ziel innerhalb des Messbereiches die zeitliche Wegauflösung nicht ändert. Dagegen sind Reflektionen, die von einem weiter entfernten Objekt empfangen werden, durch die zeitliche Variation der Sendeimpulse, bezogen auf einen längeren Messzyklus, nicht mehr zeitlich stabil. Die Folge davon ist, dass ein durch ein Femecho empfangener Puls eine kleinere Amplitude und gleichzeitig auch ein anderes zeitliches Verhalten hat, als ein regulärer Zielpuls. Dieser kann durch einfache Algorithmen in der Signalverarbeitung eliminiert werden.

Die Auslegung des Zählers 13 in der Verzögerungskette 11 erfolgt zweckmäßig so, dass mindestens so viel Stufen mit unterschiedlichem relativen Zeitversatz vorgesehen sind, wie Messungen innerhalb eines Zyklus durchgeführt werden. Durch diese Maßnahme lassen sich scheinbare Ziele im eigentlichen Messbereich, die durch Femechos hervorgerufen werden, maximal bedämpfen.

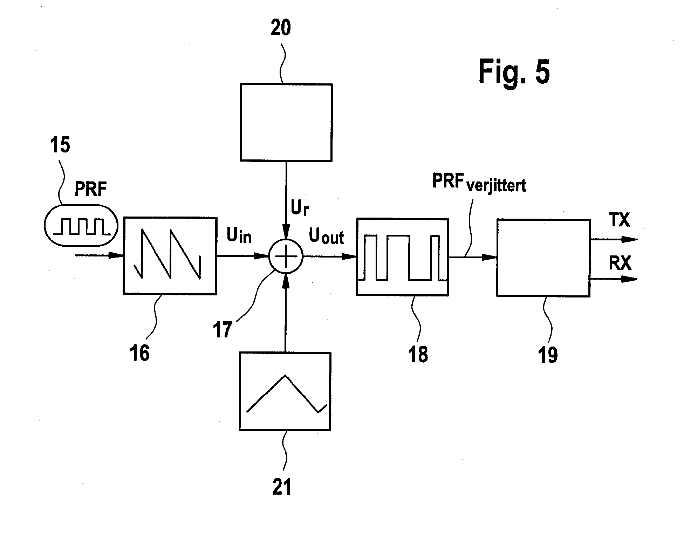

Eine weitere Anordnung, insbesondere zum Durchführen des Verfahrens nach der Erfindung, zeigt Figur 5.

Das PRF-Signal (Pulse Repetition Frequency) der Taktquelle 15 gelangt zuerst auf einen Sägezahngenerator 16 zur Triggerung desselben. Dessen Ausgangssignal, das die gleiche Periode wie das Eingangssignal (PRF-Signal) besitzt, wird mittels einer Signalsummiereinrichtung 17 zu 2 Signalen entsprechender Amplitude addiert. Dabei stellt das eine Signal eine sich langsam, z.B. dreieckförmig ändernde Spannung (Signalgenerator 21), das andere Signal eine sich mit dem PRF-Takt ändernde, insbesondere zufallscodierte Spannung kleiner Amplitude dar (zufallscodierte Signalquelle 20). Nach der Summation der drei Signale ändert sich das Mittenpotenzial des Ausgangssignales Uₒᵤₜ entsprechend. Diese Änderung wird im nachgeschalteten Pulsformer 18 in der Art ausgewertet, dass sich die Periode der Ausgangsgröße mit jedem Takt der PRF ändert.

Das so erzeugte Ansteuersignal für die analoge Verzögerungsleitung 19 hat somit nicht mehr eine feste PRF, vielmehr ändert sich diese in kleinen Zeitschritten. Die Periode des Ausgangssignals TX der Verzögerungsleitung 19 steht einerseits in direktem Zusammenhang zum Eingangssignal (PRFᵥₑᵣⱼᵢₜₜₑᵣₜ) und findet sich andererseits in den diskreten Linien im Spektrum der HF-Sendepulse des Pulsradars wieder. Dadurch, dass die PRF nun nicht mehr fest ist, verteilt sich das Spektrum und damit die Leistung der Sendepulse jetzt auf mehr Linien. Die Verzögerungsleitung 19 liefert wie zuvor auch das Referenzsignal (RX) für die Auswertung der Echosignale einer gewünschten Empfangszelle. Zusätzlich lässt sich durch eine entsprechende Auslegung der Random-Quelle 20 eine Femechounterdrückung wie zuvor geschildert erreichen.

## Patentansprüche

1. Verfahren zum Betrieb eines Radarsensors nach dem Pulsradarprinzip, insbesondere für Radaranwendungen kleiner Reichweite, **dadurch gekennzeichnet, dass** die Sendepulse bezüglich ihres Aussendezeitpunktes innerhalb eines vorgegebenen Bereiches variiert werden.

2. Verfahren nach Anspruch 1, **dadurch gekennzeichnet, dass** die an Objekten reflektierten Empfangspulse über eine vorgegebene Zeit (T_{G}) in einer gewählten Entfernungszelle aufintegriert werden.

3. Verfahren nach Anspruch 1 oder 2, **dadurch gekennzeichnet, dass** die Variation des Aussendezeitpunktes in mehreren Stufen vorgenommen wird, um eine Femechounterdrückung in Abhängigkeit der Anzahl der Stufen zur Variation des Aussendezeitpunktes zu erzielen.

4. Anordnung zur Erzeugung zeitlich variierbarer Sendepulse, insbesondere zum Durchführen des Verfahrens nach einem der Ansprüche 1 bis 3, **gekennzeichnet durch** folgende Merkmale:
- einer von einer Taktquelle (10) gespeisten Verzögerungskette (11) mit Einzelabgriffen,
- einem Multiplexer (12), an dessen Eingänge die Einzelabgriffe der Verzögerungskette (11) geschaltet sind,
- einem Zähler (13) zur Zählung des Taktes der Taktquelle (10) und zur Ansteuerung des entsprechenden Eingangs des Multiplexers (12).

5. Anordnung zur Erzeugung zeitlich variierbarer Sendepulse, insbesondere zum Durchführen des Verfahrens nach einem der Ansprüche 1 bis 3, **gekennzeichnet durch** folgende Merkmale:
- einer Signalsummiereinrichtung (17) für ein Sägezahnsignal, für ein sich amplitudenmäßig langsam änderndes Signal und für ein sich mit dem Takt des Sägezahnsignals änderndes, insbesondere zufallcodiertes Signal kleiner Amplitude,
- einem Pulsformer (18), der eingerichtet ist, das Ausgangssignal der Signalsummiereinrichtung (17) so zu formen, dass sich die Periode der Sendepulse mit jedem Takt ändert.

6. Anordnung nach Anspruch 4, **dadurch gekennzeichnet, dass** eine Verzögerungsleitung (11) vorgesehen ist, die an den Ausgang des Multiplexers (12) derart anschließbar und einstellbar ist, dass Referenzpulse zur Auswertung der an Objekten reflektierten Sendepulse erzeugbar sind.

7. Anordnung nach Anspruch 5, **dadurch gekennzeichnet, dass** eine Verzögerungsleitung (19) vorgesehen ist, die an den Ausgang des Pulsformers (18) derart anschließbar und einstellbar ist, dass Referenzpulse zur Auswertung der an Objekten reflektierten Sendepulse erzeugbar sind.

8. Anordnung nach Anspruch 4 oder 6, **dadurch gekennzeichnet, dass** die Verzögerungskette (11) so viele Stufen aufweist wie Messungen innerhalb eines Messzyklus vorgesehen sind.
